Europäisches Patentamt

European Patent Office

Office européen des brevets

(11) Veröffentlichungsnummer: **0 236 792**

**A2**

(12) # EUROPÄISCHE PATENTANMELDUNG

(21) Anmeldenummer: **87102164.8**

(22) Anmeldetag: **16.02.87**

(51) Int. Cl.⁴: **G01N 31/16**

(30) Priorität: **11.03.86 CH 994/86**

(43) Veröffentlichungstag der Anmeldung:
**16.09.87 Patentblatt 87/38**

(84) Benannte Vertragsstaaten:
**BE DE FR GB IT NL SE**

(71) Anmelder: **ZELLWEGER USTER AG
Wilstrasse 11
CH-8610 Uster(CH)**

(72) Erfinder: **Robertson, Peter Murday, Dr.
Haldenstrasse 9
CH-8185 Winkel b. Bülach(CH)**
Erfinder: **Suter, Erwin
Vogelsangstrasse 23
CH-8006 Zürich(CH)**

(54) **Titrationsverfahren zur chemischen Analyse einer Probe und Vorrichtung zur Durchführung des Titrationsverfahrens.**

(57) Die Probe und das für die Titration benötigte Reagens werden einem Titriergefäss (1) zugeführt, wobei die Zuführung von Reagens und/oder Probe intermittierend in Form von Flüssigkeitsimpulsen erfolgt. Zu diesem Zweck ist in der Zuführleitung (4) für das Reagens ein gesteuertes Ventil (9) vorgesehen. Die Oeffnungs-und Schliesszeiten dieses Ventils (9) und damit die Frequenz und Dauer der Flüssigkeitsimpulse werden so gewählt, dass das Verhältnis des mittleren Probenstroms zum mittleren Reagensstrom dem Verhältnis von Probe und Reagens beim Aequivalenzpunkt entspricht.

Dadurch wird eine kontinuierliche Titration ermöglicht, für welche nur eine Pumpe (7) benötigt wird, welche keinerlei aufwendige Servosysteme erfordert und daher einen geringen Energieverbrauch aufweist.

FIG. 1

**EP 0 236 792 A2**

## Titrationsverfahren zur chemischen Analyse einer Probe und Vorrichtung zur Durchführung des Titrationsverfahrens

Unter Titration versteht man bekanntlich die Ermittlung des unbekannten Gehalts der wässerigen Lösung einer Säure oder Base (Probe) durch Zusatz einer Base-bzw. Säurelösung - (Reagens) bekannter Konzentration bis zum Umschlagen eines Indikators. Aus Kubikzentimeter-Anzahl und Konzentration (Titer) der verbrauchten Base oder Säure lässt sich dann ohne weiteres der Säure-bzw. Basegehalt der in dieser Weise titrierten Lösung errechnen.

Für die Titration unter labormässigen Bedingungen verwendet man das bekannte diskontinuierliche Titrationsverfahren mit Pipette und -eventuell motorisch angetriebener -Bürette. Da dieses Verfahren die ständige Anwesenheit einer Bedienungsperson erfordert, ist es für einen industriellen Einsatz nicht geeignet.

Es wurde schon vorgeschlagen, die diskontinuierliche Titration zu automatisieren, um sie auch industriell einsetzen zu können. Da sich dabei aber erhebliche Probleme bei der Förderung von Probe und Reagens zum und beim Ab lauf der titrierten Lösung vom Titriergefäss sowie bei der Dossierung der Flüssigkeitsmengen ergeben, was unter anderem eine Vielzahl von Ventilen erfordert, hat sich diese automatisierte diskontinuierliche Titration nicht durchgesetzt. Dazu kommt noch, dass dür die Ventile aufwendige Steuerungen erforderlich sind und dass der errechnete Titer jeweils von einer Titration bis zur nächsten gespeichert werden muss, wozu entsprechende zusätzliche Hilfsmittel benötigt werden.

Für den industriellen Einsatz sind kontinuierliche Titrationsverfahren bekannt, bei denen Probe und Reagens dem Titriergefäss in einem gesteuerten und variablen Verhältnis zugeführt werden. Dazu benötigt man mindestens zwei einstellbare Pumpen, deren Regelung aufwendige Servosysteme erfordert und welche ausserdem eine hohe Leistungsaufnahme haben.

Die Erfindung betrifft nun ein Titrationsverfahren zur chemischen Analyse einer Probe, bei welchem die Probe in einem Titriergefäss kontinuierlich mit einem Reagens gemischt und mittels eines geeigneten Sensors der Aequivalenzpunkt ermittelt wird.

Das erfindungsgemässe Titrationsverfahren soll die kontinuierliche Bestimmung der Konzentration einer Probe mit Hilfe eines kontinuierlichen Titrationsverfahrens ermöglichen, welches weder zwei einstellbare und viel Energie verbrauchende Pumpen, noch aufwendige Servosysteme für deren Steuerung benötigt.

Diese Aufgabe wird erfindungsgemäss dadurch gelöst, dass die Zuführung des Reagens und/oder der Probe zum Titriergefäss intermittierend in Form von Flüssigkeitsimpulsen erfolgt, wobei Frequenz und Dauer dieser Flüssigkeitsimpulse so gewählt werden, dass das Verhältnis des mittleren Probenstroms zum mittleren Reagensstrom dem Verhältnis von Probe und Reagens beim Aequivalenzpunkt entspricht.

Die Erfindung betrifft weiter eine Vorrichtung zur Durchführung des genannten Titrationsverfahrens mit einem einen Sensor enthaltenden Titriergefäss und mit an dieses führenden Zuführleitungen für die Probe und das Reagens. Diese ist gekennzeichnet durch ein in der Zuführleitung für das Reagens und/oder in der Zuführleitung für die Probe angeordnetes Ventil und durch ein diesem Ventil zugeordnetes Steuerorgan zur Steuerung der Oeffnungs-und Schliesszeiten des Ventils zum Zweck der Einstellung des genannten Verhältnisses zwischen dem mittleren Proben-und dem mittleren Reagensstrom.

Durch die erfindungsgemässe intermittierende Förderung von Reagens und/oder Probe und durch die erfindungsgemässe Wahl des genannten Verhältnisses zwischen dem mittleren Proben-und dem mittleren Reagensstrom benötigt man für die Förderung von Probe und Reagens nur eine einzige Pumpe, die beide Ströme kontinuierlich fördert und daher kein Servosystem benötigt. Die intermittierende Förderung wird durch ein gesteuertes Ventil bewerkstelligt und die Steuerung von dessen Oeffnungs-und Schliesszeiten und damit die Einstellung des genannten Verhältnisses zwischen mittlerem Proben-und mittlerem Reagensstrom erfolgt durch ein geeignetes Steuerorgan, das durch einen einfachen elektronischen Baustein gebildet ist.

Nachstehend wird die Erfindung anhand eines in den Zeichnungen dargestellten Ausführungsbeispiels näher erläutert; es zeigt:

Fig. 1 eine schematische Darstellung einer erfindungsgemässen Titrierapparatur, und

Fig. 2 Diagramme zur Funktionserläuterung.

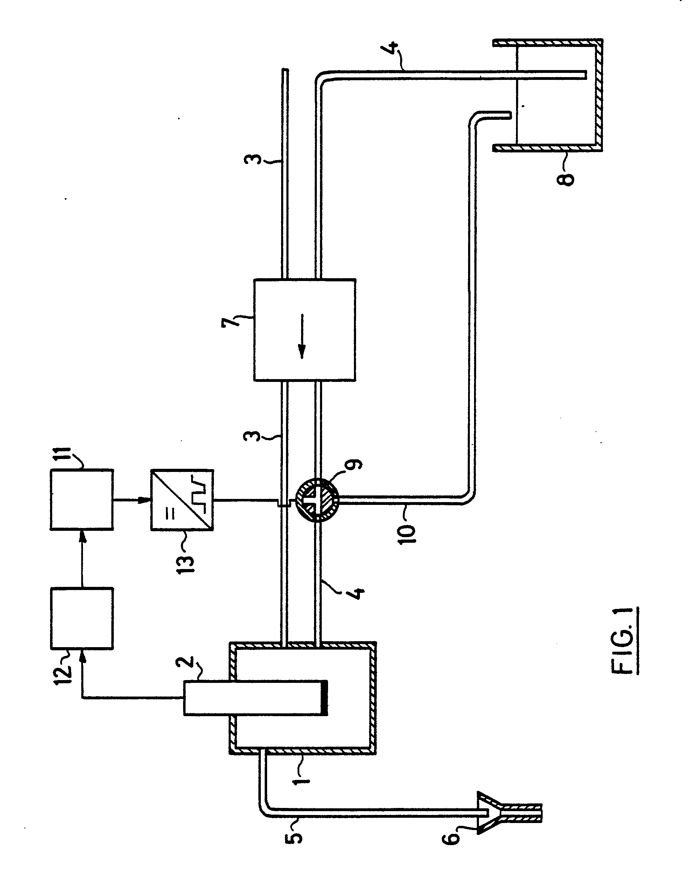

Gemäss Fig. 1 weist die Apparatur ein Titriergefäss 1 mit einem Messensor 2 zur Bestimmung des Aequivalenzpunktes einer titrierten Probe auf. Die zu untersuchende Probe und das Reagens werden dem Titriergefäss 1 über eine Leitung 3 beziehungsweise 4 zugeführt. Zur Ableitung der titrierten Lösung aus dem Titriergefäss 1 dient eine in einen Ablauf 5 mündende Leitung 6.

Die beiden Leitungen 3 und 4 sind über ein Pumpsystem 7, vorzugsweise eine peristaltische Pumpe, geführt, mit welcher die zu titrierende Probe und das Reagens mit einer gegebenen Förderrate gefördert werden. Die dargestellte Apparatur ist insbesondere für industrielle Anwendungen, beispielsweise für die Analyse von Phosphatierbädern geeignet, wobei die Leitung 3 für die Probe vom Produktionskreislauf abzweigt und die Leitung 4 das Reagens von einem Reagensbehälter 8 bezieht.

Zur Steuerung des Verhältnisses zwischen den dem Titriergefäss 1 zugeführten Volumina von Probe und Reagens ist in der Leitung 4 zwischen Pumpe 7 und Titriergefäss 1 ein gesteuertes Ventil 9 angeordnet. Dieses Ventil könnte anstatt in der Leitung 4 auch in der Leitung 3 oder sogar in beiden Leitungen vorgesehen sein. Das Ventil 9 ist darstellungsgemäss ein Dreiwegventil, an dessen dritten Anschluss eine Leitung 10 für die Rückführung des Reagens bei geschlossener Leitung 4 an den Reagensbehälter 8 angeschlossen ist. Selbstverständlich könnte man anstelle des einen Dreiwegventils 9 auch zwei Zweigventile verwenden. In diesem Fall hätte die Leitung 4 nach der Pumpe 7 eine Verzweigung, von welcher ein erster Ast mit dem ersten Zweigventil zum Titriergefäss 1 und ein zweiter Ast mit dem zweiten Zweiwegventil zum Reagensbehälter 8 führen würde.

Wenn man das Ventil 9 in einem bestimmten Rhythmus öffnet und schliesst, also in einem bestimmten Tastverhältnis betätigt, dann ergibt sich ein mittlerer Reagensstrom, der diesem Tastverhältnis proportional ist. Da der Probenstrom in der Leitung 3 konstant ist, ist auch der mittlere Probenstrom in dieser Leitung konstant und somit werden im Titriergefäss 1 Probe und Reagens in einem Verhältnis gemischt, welches dem genannten Tastverhältnis des Ventils 9 proportional ist.

Das Tastverhältnis wird so gesteuert, dass sich im Titriergefäss 1 der Aequivalenzpunkt einstellt, und dies ereicht man dadurch, dass man das Tastverhältnis so wählt, dass das Verhältnis des mittleren Probenstroms zum mittleren Reagensstrom dem Verhältnis von Probe und Reagens beim Aequivalenzpunkt entspricht.

Das Volumen der Lösung im Titriergefäss 1 wird so gross gewählt, dass durch die intermittierende, impulsartige Zugabe des Reagens verursachte Konzentrationsschwankungen unterdrückt oder zumindest so klein gehalten werden, dass die Genauigkeit der Analyse nicht beeinträchtigt wird. In der Praxis ist dafür ausreichend, wenn das Volumen des Titriergefässes 1 mindestens 10mal so gross ist wie das mit einem Flüssigkeitsimpuls maximal in das Titriergefäss 1 injizierte Reagensvolumen. Es sei in diesem Zusammenhang darauf hingewiesen, dass die Oeffnungzeit des Ventils 9 und somit der längstmögliche Reagensimpuls nicht länger dauert als 10 Sekunden, wogegen die Verweilzeit der gerade titrierten Lösung im Titriergefäss 1 in der Grössenordnung von einigen Minuten liegt. Dadurch glättet das Volumen des Titriergefässes 1 die Variationen in der Lösungszufuhr aus und hält die Konzentration im Titriergefäss 1 ausreichend konstant. Das Ventil 9 wird also immer nur so lange geöffnet, dass das Verhältnis der beiden Komponenten im Titriergefäss 1 deren Verhältnis beim Aequivalenzpunkt entspricht.

Die Steuerung des Dreiwegventils 9 erfolgt über einen PID-Regler 11 (es kann auch ein P-oder ein PI-Regler verwendet werden), dessen Eingang über einen Messumformer 12 mit dem Messensor 2 und dessen Ausgang über einen Pulsbreitenmodulator 13 mit dem Ventil 9 verbunden ist. Der Messensor 2 ist ein üblicher Sensor für Titrationen, beispielsweise eine pH-Elektrode, eine Redox-Elektrode, ein Photometer und dergleichen. Das Ausgangssignal des Messsensors 2 wird durch den Messumformer 12 in bekannter Weise umgeformt, beispielsweise erfolgt eine Impedanzumwandlung oder die Erzeugung eines standardisierten Signals mit Temperaturkorrektur, und der PID-Regler 11 vergleicht das vom Messumformer 12 gelieferte Ist-Signal mit einem Soll-Signal und gibt an den Pulsbreitenmodulator 13 ein der Differenz zwischen Ist- und Soll-Signal proportionales Analogsignal ab. Dabei entspricht das Soll-Signal demjenigen für den Aequivalenzpunkt der jeweiligen Probe.

Der Pulsbreitenmodulator 13 wandelt nun das Analogsignal des PID-Reglers 11 in ein entsprechendes Digitalsignal um, wobei beispielsweise die ansteigende Flanke dieses Digitalsignals das Ventil 9 (bezogen auf die Leitung 4) öffnet und die abfallende Flanke dieses wieder schliesst.

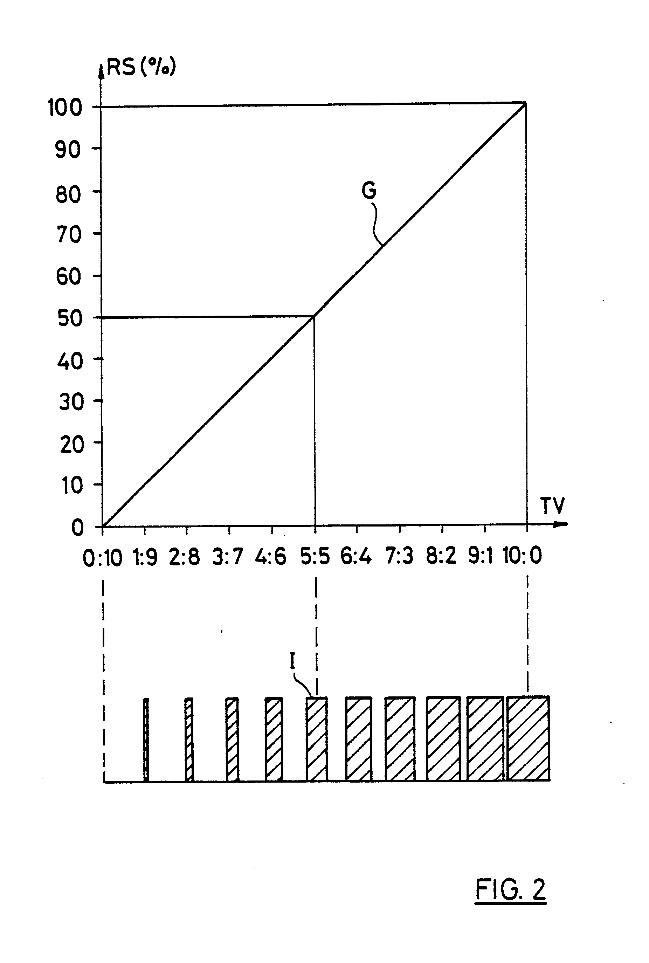

In Fig. 2 sind die Verhältnisse für die Bestimmung des mittleren Reagensstromes und die Festlegung des Tastverhältnisses des Ventils 9 anhand von zwei Diagrammen dargestellt. Dabei zeigt das in der Figur obere Diagramm den Zusammenhang zwischen mittlerem Reagensstrom RS und Tastverhältnis TV (ein/aus), und das untere Diagramm zeigt dieses Tastverhältnis in einer anderen Darstellungsform.

Auf der Ordinate des in Fig. 2 oberen Diagramms ist der mittlere Reagensstrom RS in % des Durchsatzes durch die Leitung 4 eingetragen. Dabei bedeutet 0%, dass das Ventil 9 ständig geschlossen, und 100%, dass das Ventil 9 ständig geöffnet ist. Bei 100% würden beispielsweise dem Titriergefäss 1 pro Zeiteinheit gleiche Volumina von Reagens und Probe zugeführt, bei 0% überhaupt kein Reagens. Wenn man auf der Abszisse das Tastverhältnis TV des Ventils 9 einträgt und beispielsweise für einen vollständigen Schliess-und Oeffnungszyklus des Ventils 9 eine Dauer von 10 Impulsen vorgibt, dann ist das Verhältnis Ventil offen zu Ventil geschlossen bei 0% gleich 0:10 und bei 100% gleich 10:0. Daraus ergibt sich für den Zusammenhang zwischen mittlerem Reagensstrom RS und Tastverhältnis TV die eingezeichnete Gerade G. Wenn nun das Fördervolumen in der Leitung 4 bei 100% RS sowie die Konzentration der Reagenslösung bekannt ist, dann kann man errechnen, wieviel % RS für das Erreichen des Aequivalenzpunktes bei der Titration erforder lich sind. Ist dieser Wert beispielsweise wie dargestellt gleich 50%, dann ergibt sich für die Betätigung des Ventils 9 ein Tastverhältnis von 5:5.

Im unteren Teil von Fig. 2 ist das Tastverhältnis anhand der effektiven Ein-und Ausschaltzeit des Ventils 9 dargestellt, wobei die schraffierten Flächen bedeuten, dass das Ventil 9 eingeschaltet ist. Für den Fall des gewählten Beispiels von RS = 50% und TV = 5:5, wäre also das Ventil 9 entsprechend dem Impuls I jeweils die eine Hälfte eines Zyklus offen und die andere Hälfte geschlossen. Der Impuls I entspricht somit, was seine Breite betrifft, dem Ausgangssignal des Pulsbreitenmodulators 13, dessen ansteigende Flanke das Ventil 9 öffnet und dessen abfallende Flanke das Ventil 9 schliesst. Die Dauer eines Zyklus beträgt 1 bis 10, vorzugsweise etwa 5 Sekunden.

Wenn das Ventil 9 in der Probenleitung 3 angeordnet ist, dann gelten die anhand von Fig. 2 beschriebenen Verhältnisse vice versa für den Probenstrom. Man sieht somit, dass durch die Steuerung der Dauer der Oeffnungs-und Schliessimpulse des Ventils 9 im Titriergefäss 1 jeder gewünschte Konzentrationsanteil zwischen 0° und 100° des Konzentrationsbereichs von Probe oder Reagens erreicht werden kann.

Das beschriebene Verfahren und die beschriebene Vorrichtung ermöglichen eine kontinuierliche Titration mit nur einer Pumpe. Verglichen mit dem für eine zweite Pumpe und für das Servosystem zweier Pumpen erforderlichen Mehraufwand, ist der Aufwand für das Ventil 9 und dessen Steuerung unbedeutend. Die Vorrichtung ist wegen ihres einfachen Aufbaus bedienungsfreund lich und stellt an die Bedienungsperson keine hohen Ansprüche. Sie ist ausserdem wegen der geringen Anzahl von Komponenten auch wartungsfreundlich und ist deswegen für einen industriellen und gewerblichen Einsatz, beispielsweise zur Analyse von Eloxier-oder Phosphatisierbädern und dergleichen bestens geeignet.

## Ansprüche

1. Titrationsverfahren zur chemischen Analyse einer Probe, bei welchem die Probe in einem Titriergefäss kontinuierlich mit einem Reagens gemischt und mittels eines geeigneten Sensors der Aequivalenzpunkt ermittelt wird, dadurch gekennzeichnet, dass die Zuführung des Reagens und/oder der Probe zum Titriergefäss (1) intermittierend in Form von Flüssigkeitsimpulsen (I) erfolgt, wobei Frequenz und Dauer dieser Flüssigkeitsimpulse so gewählt werden, dass das Verhältnis des mittleren Probenstroms zum mittleren Reagensstrom dem Verhältnis von Probe und Reagens beim Aequivalenzpunkt entspricht.

2. Titrationsverfahren nach Anspruch 1, dadurch gekennzeichnet, dass die Probe kontinuierlich und das Reagens intermittierend in das Titriergefäss (1) gefördert wird.

3. Titrationsverfahren nach Anspruch 2, dadurch gekennzeichnet, dass Probe und Reagens von einer gemeinsamen Pumpe (7) kontinuierlich gefördert werden, und dass die Erzeugung der Flüssigkeitsimpulse des Reagensstroms zwischen Pumpe und Titriergefäss (1) erfolgt.

4. Titrationsverfahren nach einem der Ansprüche 1 bis 3, dadurch gekennzeichnet, dass das Volumen des Titriergefäss (1) grösser gewählt wird, als das durch einen Flüssigkeitsvolumen und vorzugsweise mindestens das 10-fache des letzteren beträgt.

5. Titrationsverfahren nach Anspruch 4, dadurch gekennzeichnet, dass die Dauer eines Flüssigkeitsimpulses in der Grössenordnung von Sekunden liegt und vorzugsweise 0,1 bis 10 Sekunden beträgt.

6. Vorrichtung zur Durchführung des Titrationsverfahrens nach Anspruch 1, mit einem einen Sensor enthaltenden Titriergefäss und mit an dieses führenden Zuführleitungen für die Probe und das Reagens, gekennzeichnet durch ein in der Zuführleitung (4) für das Reagens und/oder in der Zuführleitung (3) für die Probe angeordnetes gesteuertes Ventil (9) und durch ein diesem Ventil zugeordnetes Steuerorgan (11, 12,13) zur Steuerung der Oeffungs-und Schliesszeiten des Ventils zum Zweck der Einstellung des genannten Verhältnisses zwischen dem mittleren Proben-und dem mittleren Reagensstrom.

7. Vorrichtung nach Anspruch 6, dadurch gekennzeichnet, dass das Ventil (9) in der Zuführleitung (4) für das Reagens angeordnet ist.

8. Vorrichtung nach Anspruch 7, dadurch gekennzeichnet, dass die Zuführleitungen für Probe und Reagens (3 bzw. 4) über eine gemeinsame Förderpumpe (7) geführt sind und dass das Ventil (9) zwischen dieser und dem Titriergefäss (1) angeordnet ist.

9. Vorrichtung nach einem der Ansprüche 6 bis 8, dadurch gekennzeichnet, dass das Ventil (9) durch ein Dreiwegventil gebildet ist, an dessen dritten Anschluss eine zum Reagensvorrat (8) zurückführende Leitung (10) angeschlossen ist.

10. Vorrichtung nach Anspruch 8, dadurch gekennzeichnet, dass die Zuführleitung (4) für das Reagens nach der Pumpe (7) eine Verzweigung aufweist, in deren zum Titriergefäss (1) führendem Ast (4) ein erstes Zweiwegventil und in deren zum Reagensvorrat (8) zurückführenden zweiten Ast (10) ein zweites Zweiwegventil angeordnet ist.

11. Vorrichtung nach Anspruch 9 oder 10, dadurch gekennzeichnet, dass das Steuerorgan für das Dreiwegventil (9) oder die Zweigventile einen PID-Regler (11) enthält.

12. Vorrichtung nach Anspruch 11, dadurch gekennzeichnet, dass der Eingang des PID-Reglers (11) über einen Messumformer (12) an den Sensor (2), und der Ausgang über einen Pulsbreitenmodulator (13) an das Ventil (9) bzw. die Ventile angeschlossen ist.

13. Vorrichtung nach Anspruch 12, dadurch gekennzeichnet, dass der Pulsbreitenmodulator (13) aus dem Ausgangssignal des PID-Reglers (11) ein impulsförmiges Signal erzeugt, wobei die Breite der einzelnen Impulse dieses Signals die Oeffnungs-und Schliesszeiten des Ventils (9) bzw. der Ventile festlegt.

FIG. 1

0 236 792

FIG. 2